# EUROPEAN PATENT SPECIFICATION

(11) **EP 3 897 298 B1**
(45) Date of publication and mention of the grant of the patent: **05.06.2024**
(21) Application number: 19836527.2
(22) Date of filing: 15.12.2019
(51) Int. Cl.: A47B 96/02, A47B 96/06

(54) **SHELF WITH A LOCKING SYSTEM AND METHOD FOR LOCKING A SHELF TO A FURNITURE ITEM**
REGAL MIT VERRIEGELUNGSSYSTEM UND VERFAHREN ZUM VERRIEGELN EINES REGALS AN EINEM MÖBEL
ÉTAGÈRE AVEC SYSTÈME DE VERROUILLAGE ET PROCÉDÉ POUR VERROUILLER UNE ÉTAGÈRE SUR UN MEUBLE

(30) Priority: 18.12.2018 IT 201800020011
(43) Date of publication of application: 27.10.2021
(73) Proprietor: Bortoluzzi Sistemi S.p.A., 32100 Belluno (IT)
(72) Inventor: SPONGA, Bruno, 32100 Belluno (IT); PIANCA, Marco, 32100 Belluno (IT)
(74) Representative: Citron, Massimiliano
(86) International application number: PCT/IB2019/060813
(87) International publication number: WO 2020/128769

(56) References cited:
- EP-A2- 2 886 012
- DE-U1-202009 010 237
- US-A- 3 596 942

## Description

The invention relates to a locking system for shelves of furniture or shelving units.

It is known that furniture items or cabinets are furnished with shelves that often are not sliding and extractable horizontally, that is, the shelf is fixed to the furniture walls. For reasons of economy and ease of assembly, the fixing occurs between a plug protruding from the wall and a corresponding vertical recess in the shelf.

Clearly the biggest disadvantage is that the shelf could be raised accidentally, since only its weight binds it to the furniture item.

EP 2 886 012, DE 20 2009 010237 and US 3 596 942 disclose locking systems for a shelf.

Improving this state of the art is the main object of the invention, which is defined in the appended claims, in which the dependent ones define advantageous variants.

Another object is to provide an improved assembly given by a shelf of the above mentioned type and means for fixing it to the furniture item.

The shelf comprises a support surface for supporting objects and the opposite sides of the shelf each comprise a surface groove which has
an entrance at the base of the side and
a blind end connected by a channel that deviates (e.g. substantially by 90 degrees) with respect to a line orthogonal to the support surface,
the groove being configured so that the fixed element can be inserted into the entrance and placed at the blind end by sliding along the channel.

In this way, the fixed element can be fitted at the end of the groove without letting it going out. The geometry of the surface groove, which is not straight but with at least one change of direction, ensures that the fixed element cannot come out of the surface groove if the shelf is raised vertically.

The invention relates to a system for locking a shelf of a furniture item or shelving unit to a fixed element protruding from the wall of the furniture item or shelving unit, comprising
a shelf as in any of the variants,
a fixed element protruding from the wall of the furniture item or shelving unit,

the groove and the fixed element being configured so that the groove can be coupled to the fixed element thereby carrying the latter to the blind end by following the first and second segment in sequence.

The channel comprises
a first segment connected to a second segment,
the first segment being substantially orthogonal to an imaginary plane in which the support surface lies and having at one end said entrance, and
the second segment being angled with respect to the first one and ending with said blind end.

Here are some preferred variants for the invention.

According to a preferred embodiment, the first and second segments are arranged substantially at 90 degrees to each other.

To facilitate assembly, preferably the second segment is substantially parallel to said imaginary plane.

To improve the stability of the shelf, preferably the shelf comprises an undercut that extends under the perimeter of the channel at least at the blind end; thus the fixed element can be retained by the undercut.

Preferably the shelf comprises an undercut which extends under the perimeter of the second segment and preferably also of the first one.

To facilitate the insertion of the fixed element into the groove, the edges of the first segment are converging towards a connection area with the second segment.

Preferably, the fixed element comprises a stem for fixing to the furniture item and a protruding mushroom-shaped head, wherein the perimeter of the channel, at least for the portion at the blind end and/or for the portion deflected by said orthogonal line, is narrower than said head.

Preferably the dimensions of the stem are such as to allow it to enter the width of the first and second segment, the dimensions of the head being greater than the width of the first and second segment and such as to allow it to only enter the undercut.

The system comprises an element which can be jointed in the first segment to block the fixed element inside the second segment.

The jointable element comprises an elastically deformable portion adapted to press against the shelf when the jointable element is inserted in the first segment.

Preferably the jointable element comprises an elastically deformable portion adapted to press the edges of the first segment when the jointable element is inserted in the first segment.

The advantages of the invention will be even clearer from the following description of a preferred exemplary system, referring to the attached drawing in which
- Fig. 1 shows a three-dimensional view of a shelf for a furniture item or shelving unit;
- Fig. 2 shows a vertical cross-sectional view of the shelf according to the VI-VI plane of fig. 1;
- Figures 3-4 show three-dimensional views of a blocking component;
- Fig. 5 shows a front view of the component of fig. 4;
- Fig. 6 shows a vertical cross-sectional view of the component of fig. 4 according to plane VI-VI of fig. 5;
- Fig. 7 shows an assembly sequence for the shelf in fig. 1.

In the figures equal numbers indicate equal or conceptually similar parts, and the elements are described as in use. In order not to crowd the figures some numeric references are omitted.

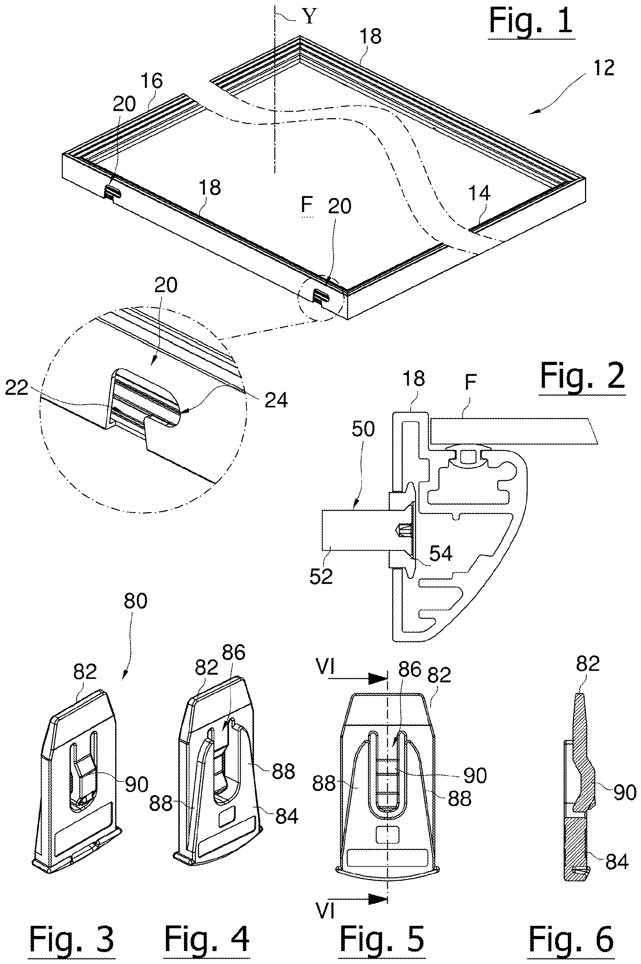

Fig. 1 shows a shelf 12 comprising a frame formed by a front segment 14, a rear segment 16 and two lateral segments 18. The segments 14, 16, 18 are e.g. tubular parts with ends cut at 90 degrees to fit together, and are assembled to form an overall rectangular or square frame. The rear of the shelf 12 is indicated by F, and it lies on a - in use - horizontal plane, namely orthogonal to a Y axis.

The lateral segments 18 are each provided with at least two identical sides openings or slots 20, which can be carved out of the material or obtained by material removal.

Each slot 20 is formed by the union of a vertical segment 22, parallel to the Y axis, and a horizontal segment 24, oriented at about 90 degrees with respect to the first one along the direction of the length of the segment 18.

The vertical segment 22 extends from the lower edge of the segment 18 to approximately its half height, and has a tapering width. The horizontal segment 24 has substantially a constant width.

Both the edges of the vertical segment 22 and those of the horizontal segment 24 are provided with an undercut.

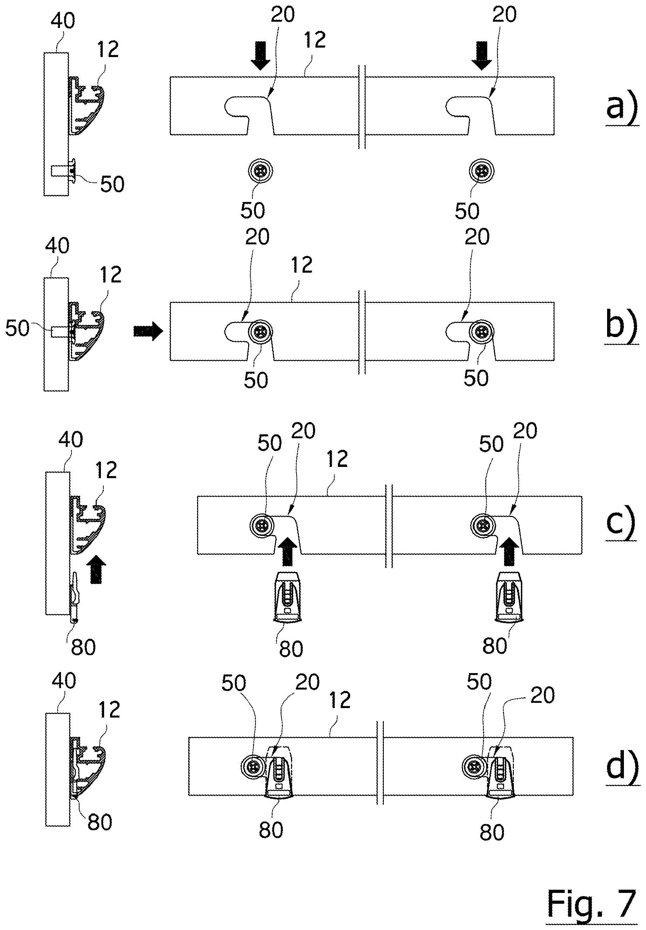

The fixing of the shelf to a wall 40 occurs by means of four supports 50, two for each segment 18. The supports 50 have a stem 52 fixed to the wall 40 and a mushroom-shaped protruding head 54, see Fig. 2 and 7a.

The stem 52 has such dimensions that it can be inserted and can slide into the vertical segment 22 (fig. 7b) and then along the horizontal segment 54, up to a limit position (fig. 7c).

The distance between the edges of the vertical segment 52 is greater than the width of the head 54.

The distance between the edges of the horizontal segment 24 is substantially equal to the width of the stem 52, therefore less than the width of the head 54, which head can remain trapped inside the undercut.

To mount the shelf 12 (fig. 7a), it is moved closer to the supports 50.

By aligning the supports 50 with the vertical segments 22, the supports 50 are inserted inside the vertical segments 22 (fig. 7b) by lowering the shelf 12.

Then, by moving the shelf 12 horizontally, the supports 50 are inserted inside the respective horizontal segment 24 (fig. 7c), with a movement that brings the supports 50 at the end of the respective horizontal segment 24 (fig. 7c).

Even in the configuration of fig. 7c the shelf 12 cannot be released from the supports 50 with an ordinary displacement. In particular, the supports 50 oppose a vertical lifting thereof.

In a preferred variant, the shelf 12 is blocked in a static position on the supports 50 by means of at least one blocking element, in particular an element inserted or insertable into the slot 20 to close a horizontal segment 24 thereby preventing a backward displacement of the support 50 placed therein.

A preferred blocking element 80 is shown in figures 3 ÷ 6 and fig. 7d.

It is a block, e.g. made of plastic or rubber or deformable material, formed by the union of a parallelepiped element, with an approximately rectangular base 82, superimposed on a truncated cone-shaped relief 84, which have a short base on the same plane. The rectangular base of element 82 is as wide as the entrance of the segment 22, while the perimeter of the frustoconical relief 84 is complementary to the edges of the segment 22. It follows that the element 80 can be inserted snugly into the segment 22. After insertion, the edges of the parallelepiped element 82 have slipped into the undercut of the segment 22 while the perimeter of the relief 84 abuts against the edges of the segment 22 (fig. 7d).

Advantageously, the blocking element 80 remains stable inside the segment 22 thanks to the pressure of the undercut on the element 82.

Advantageously, the blocking element 80 fills the cavity of the segment 22 thanks to the relief 84, thereby avoiding discontinuity in the volume of the segment 18.

To prevent the blocking element 80 from slipping out of the segment 22, it is preferable to modify the blocking element 80.

E.g. the relief 84 comprises a central recess 86 which divides the tapered part thereof into two parts 88. The parts 88 can come closer to each other by slightly flexing during insertion into the segment 22, and by returning elastically into position they press against the edges of the segment 22, thereby improving the anchoring on the segment 18.

The blocking element 80 comprises a flexible flap 90 which at rest protrudes from the plane of the rectangular base of the parallelepiped element 82 and which can flex to go back inside such base more (jutting out less). When the blocking element 80 is inserted into the segment 22, the flap 90 presses elastically against a wall of the segment 22, and by friction it increases the anchoring force to the segment 18.

## Claims

1. System for locking a shelf (12) of a piece of furniture or a shelving unit to a fixed element (50) projecting from the wall of the piece of furniture or shelving unit, comprising
• a shelf (12) comprising
a supporting surface (F) for supporting objects and
the opposite sides (18) of the shelf each comprise a surface groove (20) having an inlet (22) at the base of the side and a blind end connected by a channel (22, 24) which deviates with respect to a line orthogonal to the supporting surface (F);
wherein the channel comprises a first segment (22) connected to a second segment (24), the first segment (22) being substantially orthogonal to an imaginary plane on which the supporting surface (F) lies and having at one end said inlet, the second segment (24) being angled with respect to the first one (22) and ending with said blind end;
• a first fixed element (50) projecting from the wall of the piece of furniture or shelving unit;
the groove being configured so that the fixed element can be inserted into the inlet (22), and
the groove (20) and the fixed element (50) being configured so that the groove (20) is couplable to the fixed element (50) thereby bringing the latter to the blind end by travelling the first and second segments (22, 24) in sequence;
• a second element (80) insertable in the first segment (22) to block the fixed first element (50) inside the second segment (24), wherein said second element (80) comprises an elastically deformable portion (90) adapted to press against the shelf (12) when said second element (80) is inserted in the first segment (22), and
**characterized in that**
the shelf (12) comprises a frame formed by a front segment (14), a rear segment (16) and two lateral segments (18), wherein
the segments (14, 16, 18) are assembled to form an overall rectangular or square frame, and
the lateral segments (18) are each provided with at least two identical of said grooves (20) which are carved out of the material or obtained by material removal.

2. System according to claim 1, wherein said second element (80) comprises an elastically deformable portion (88) adapted to press the edges of the first segment (22) when said element is inserted in the first segment (22).

3. System according to claim 1 or 2, wherein the first and second segments (22. 24) are arranged substantially at 90 degrees with respect to each other.

4. System according to any one of the previous claims, comprising an undercut extending under the perimeter of the channel at least at the blind end.

5. System according to any one of the previous claims, wherein the edges of the first segment (22) are converging towards a connecting zone with the second segment (24).

6. System according to any previous claim, wherein the fixed first element (50) comprises a stem (52) for fixing to the furniture item and a mushroom-shaped protruding head (54),
wherein the perimeter of the channel, at least for the portion at the blind end and/or for the portion deviated from said orthogonal line, is narrower than said head (54).

7. System according to claim 4 and 6, wherein
the dimensions of the stem (52) are such as to allow it to enter the width of the first and second segments (22, 24),
the dimensions of the head (54) being greater than the width of the first and second segments (22, 24) and such as to allow it to enter only the undercut.

8. System according to any previous claim, wherein the second segment (24) is substantially parallel to said imaginary plane.

## Patentansprüche

1. System zum Verriegeln eines Fachbodens (12) eines Möbels oder Regals an einem festen, von der Wand des Möbels oder Regals abstehenden Element (50), umfassend:
ein Regal (12), umfassend
eine Auflagefläche (F) zum Abstützen von Gegenständen und
die gegenüberliegenden Seiten (18) des Regals umfassen jeweils eine Oberflächennut (20) mit einem Einlass (22) an der Basis der Seite und einem blinden Ende, das durch einen Kanal (22, 24) verbunden ist, der in Bezug auf eine orthogonale Linie abweicht zur Auflagefläche (F);
wobei der Kanal ein erstes Segment (22) umfasst, das mit einem zweiten Segment (24) verbunden ist, wobei das erste Segment (22) im Wesentlichen orthogonal zu einer imaginären Ebene ist, auf der die Stützfläche (F) liegt, und an einem Ende den Einlass aufweist,
das zweite Segment (24) gegenüber dem ersten (22) abgewinkelt ist und mit dem blinden Ende endet;
ein erstes festes Element (50), das von der Wand des Möbelstücks oder Regals vorsteht;
die Nut so konfiguriert ist, dass das feste Element in den Einlass (22) eingeführt werden kann, und
die Nut (20) und das feste Element (50) so konfiguriert sind, dass die Nut (20) mit dem festen Element (50) gekoppelt werden kann , wodurch letzteres durch Bewegen des ersten und zweiten Segments (22, 24) an das blinde Ende gebracht wird. der Reihe nach;
ein zweites Element (80), das in das erste Segment (22) einsetzbar ist, um das feste erste Element (50) innerhalb des zweiten Segments (24) zu blockieren, wobei das zweite Element (80) einen elastisch verformbaren Abschnitt (90) umfasst, der dazu geeignet ist, dagegen zu drücken das Regal (12), wenn das zweite Element (80) in das erste Segment (22) eingesetzt ist, und
**dadurch gekennzeichnet**
das Regal (12) umfasst einen Rahmen, der durch ein vorderes Segment (14), ein hinteres Segment (16) und zwei seitliche Segmente (18) gebildet wird, wobei
die Segmente (14, 16, 18) zu einem insgesamt rechteckigen oder quadratischen Rahmen zusammengesetzt werden, und
die seitlichen Segmente (18) jeweils mit mindestens zwei identischen der genannten Nuten (20) versehen sind, die aus dem Material herausgearbeitet oder durch Materialabtragung erhalten sind.

2. System nach Anspruch 1, wobei das zweite Element (80) einen elastisch verformbaren Abschnitt (88) umfasst, der dazu geeignet ist, die Kanten des ersten Segments (22) zu drücken, wenn das Element in das erste Segment (22) eingesetzt wird.

3. System nach Anspruch 1 oder 2, wobei die ersten und zweiten Segmente (22, 24) im Wesentlichen im 90-Grad-Winkel zueinander angeordnet sind.

4. System nach einem der vorhergehenden Ansprüche, umfassend eine Hinterschneidung, die sich unter dem Umfang des Kanals zumindest am blinden Ende erstreckt.

5. System nach einem der vorhergehenden Ansprüche, wobei die Kanten des ersten Segments (22) in Richtung einer Verbindungszone mit dem zweiten Segment (24) zusammenlaufen.

6. System nach einem der vorhergehenden Ansprüche, wobei das feste erste Element (50) einen Stiel (52) zur Befestigung am Möbelstück und einen pilzförmigen vorstehenden Kopf (54) umfasst.
wobei der Umfang des Kanals, zumindest für den Abschnitt am blinden Ende und/oder für den Abschnitt, der von der orthogonalen Linie abweicht, schmaler ist als der Kopf (54).

7. System nach Anspruch 4 und 6, wobei
Die Abmessungen des Schafts (52) sind so bemessen, dass er in die Breite des ersten und zweiten Segments (22, 24) eindringen kann, wobei die Abmessungen des Kopfs (54) größer sind als die Breite des ersten und zweiten Segments (22, 24) und so, dass es nur in die Hinterschneidung eindringen kann.

8. System nach einem der vorhergehenden Ansprüche, wobei das zweite Segment (24) im Wesentlichen parallel zur imaginären Ebene verläuft.

## Revendications

1. Système de verrouillage d'une étagère (12) d'un meuble ou d'une étagère à un élément fixe (50) dépassant de la paroi du meuble ou de l'étagère, comprenant
une étagère (12) comprenant
une surface de support (F) pour supporter des objets et
les côtés opposés (18) de l'étagère comprennent chacun une rainure superficielle (20) ayant une entrée (22) à la base du côté et une extrémité aveugle reliée par un canal (22, 24) qui s'écarte par rapport à une ligne orthogonale à la surface d'appui (F) ;
dans lequel le canal comprend un premier segment (22) relié à un deuxième segment (24), le premier segment (22) étant sensiblement orthogonal à un plan imaginaire sur lequel repose la surface de support (F) et comportant à une extrémité ladite entrée,
le deuxième segment (24) étant incliné par rapport au premier (22) et se terminant par ladite extrémité borgne ;
un premier élément fixe (50) faisant saillie sur la paroi du meuble ou de l'étagère ;
la rainure étant configurée pour que l'élément fixe puisse être inséré dans l'entrée (22), et
la rainure (20) et l'élément fixe (50) étant configurés de telle sorte que la rainure (20) puisse être couplée à l'élément fixe (50), amenant ainsi ce dernier à l'extrémité borgne en parcourant les premier et deuxième segments (22, 24). en séquence;
un deuxième élément (80) insérable dans le premier segment (22) pour bloquer le premier élément fixe (50) à l'intérieur du deuxième segment (24), dans lequel le deuxième élément (80) comprend une partie élastiquement déformable (90) adaptée pour s'appuyer contre la tablette (12) lorsque ledit deuxième élément (80) est inséré dans le premier segment (22), et
**caractérisé en ce que**
la tablette (12) comprend un cadre formé d'un segment avant (14), d'un segment arrière (16) et de deux segments latéraux (18), dans lequel
les segments (14, 16, 18) sont assemblés pour former un cadre globalement rectangulaire ou carré, et
les segments latéraux (18) sont chacun pourvus d'au moins deux desdites rainures (20) identiques qui sont creusées dans le matériau ou obtenues par enlèvement de matière.

2. Système selon la revendication 1, dans lequel ledit deuxième élément (80) comprend une partie élastiquement déformable (88) adaptée pour presser les bords du premier segment (22) lorsque ledit élément est inséré dans le premier segment (22).

3. Système selon la revendication 1 ou 2, dans lequel les premier et deuxième segments (22, 24) sont disposés sensiblement à 90 degrés l'un par rapport à l'autre.

4. Système selon l'une quelconque des revendications précédentes, comprenant une contre-dépouille s'étendant sous le périmètre du canal au moins au niveau de l'extrémité borgne.

5. Système selon l'une quelconque des revendications précédentes, dans lequel les bords du premier segment (22) sont convergents vers une zone de liaison avec le deuxième segment (24).

6. Système selon l'une quelconque des revendications précédentes, dans lequel le premier élément fixe (50) comprend une tige (52) de fixation au meuble et une tête saillante en forme de champignon (54),
dans lequel le périmètre du canal, au moins pour la partie située à l'extrémité aveugle et/ou pour la partie déviée de ladite ligne orthogonale, est plus étroit que ladite tête (54).

7. Système selon les revendications 4 et 6, dans lequel
les dimensions de la tige (52) sont telles qu'elles lui permettent d'entrer dans la largeur des premier et deuxième segments (22, 24), les dimensions de la tête (54) étant supérieures à la largeur des premier et deuxième segments (22, 24) et de manière à lui permettre de pénétrer uniquement dans la contre-dépouille.

8. Système selon l'une quelconque des revendications précédentes, dans lequel le deuxième segment (24) est sensiblement parallèle audit plan imaginaire.
